(19) Europäisches Patentamt
European Patent Office
Office européen des brevets

(11) **EP 4 456 230 A1**

(12) **EUROPEAN PATENT APPLICATION**
published in accordance with Art. 153(4) EPC

(43) Date of publication:
**30.10.2024   Bulletin 2024/44**

(21) Application number: **21969345.4**

(22) Date of filing: **28.12.2021**

(51) International Patent Classification (IPC):
**H01M 10/0525** (2010.01)     **H01M 10/0567** (2010.01)

(52) Cooperative Patent Classification (CPC):
Y02E 60/10

(86) International application number:
**PCT/CN2021/142110**

(87) International publication number:
**WO 2023/122966 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventors:
• **ZHENG, Yezhen**
  **Ningde City, Fujian 352100 (CN)**
• **ZHOU, Shaoyun**
  **Ningde City, Fujian 352100 (CN)**

(74) Representative: **Icosa**
**83 avenue Denfert-Rochereau**
**75014 Paris (FR)**

(54) **ELECTROCHEMICAL DEVICE AND ELECTRONIC DEVICE COMPRISING SAME**

(57)    This application provides an electrochemical device and an electronic device containing same. The electrochemical device includes a positive electrode, a negative electrode, a separator, and an electrolyte solution. The electrolyte solution includes an additive. An electrolyte retention coefficient of the electrochemical device is a g/Ah, satisfying: $0.5 \leq a \leq 3.5$. Based on a total mass of the electrolyte solution, a mass percentage of the additive is b%, satisfying: $0.005 \leq b \leq 3$. The additive includes at least one of lithium bis(oxalato)borate, vinyl ethylene carbonate, methylene methane disulfonate, triallyl phosphate, trifluoromethyl ethylene carbonate, or prop-1-ene-1,3-sultone. In the electrochemical device of this application, an appropriate electrolyte retention amount is maintained, and the foregoing additive is added in the electrolyte solution in an appropriate amount, thereby effectively improving the low-temperature discharge performance and safety performance of the electrochemical device. The electronic device containing the electrochemical device also exhibits good low-temperature discharge performance and safety performance.

**EP 4 456 230 A1**

## EP 4 456 230 A1

**Description**

### TECHNICAL FIELD

This application relates to the field of electrochemical technology, and in particular, to an electrochemical device and an electronic device containing same.

### BACKGROUND

As a new type of mobile energy storage device, a secondary battery (such as a lithium-ion battery) has been widely used in the field of portable electronic devices such as a mobile phone, a notebook computer, and a video camera by virtue of a high energy density, a high working voltage, a long cycle life, no memory effect, and environment-friendliness. The application range of the secondary battery is expanding from small portable electronic devices to large electric vehicles and renewable energy storage. With the wide application of the lithium-ion battery in the above fields, people are expecting higher performance of the lithium-ion battery, for example, a higher energy density, higher safety performance, and low cost.

### SUMMARY

An objective of this application is to provide an electrochemical device and an electronic device containing same to improve low-temperature discharge performance and safety performance of the electrochemical device.

A first aspect of this application provides an electrochemical device. The electrochemical device includes a positive electrode, a negative electrode, a separator, and an electrolyte solution. The electrolyte solution includes an additive. An electrolyte retention coefficient of the electrochemical device is a g/Ah, satisfying: $0.5 \leq a \leq 3.5$. Based on a total mass of the electrolyte solution, a mass percentage of the additive is b%, satisfying: $0.005 \leq b \leq 3$. The additive includes at least one of lithium bis(oxalato)borate, vinyl ethylene carbonate, methylene methane disulfonate, triallyl phosphate, trifluoromethyl ethylene carbonate, or prop-1-ene-1,3-sultone.

In some embodiments in the first aspect of this application, the electrolyte retention coefficient of the electrochemical device, denoted as a g/Ah, is 1 g/Ah to 2.5 g/Ah and satisfies: $-1.6 \leq \ln(a \times b) \leq 1.8$.

In some embodiments in the first aspect of this application, a tortuosity d of the separator is 1.5 to 3, satisfying: $0.6 \leq d/a \leq 3$.

In some embodiments in the first aspect of this application, the electrolyte solution further includes vinylene carbonate. Based on the total mass of the electrolyte solution, a mass percentage of the vinylene carbonate is c%, satisfying: $0.005 \leq c \leq 3$, and $0.003 \leq c/a \leq 3$.

In some embodiments in the first aspect of this application, the electrolyte solution further includes a sulfonate ester compound. The sulfonate ester compound includes at least one of 1,3-propane sultone, 1,4-butane sultone, 1,3-propane disulfonic anhydride, or 2,4-butane sultone. Based on the total mass of the electrolyte solution, a mass percentage of the sulfonate ester compound is e%, satisfying: $0.01 \leq e \leq 5$.

In some embodiments in the first aspect of this application, the electrolyte solution includes a first fluorine-containing lithium salt additive. The first fluorine-containing lithium salt additive includes at least one of lithium bis(trifluoromethanesulfonyl)imide or lithium bis(fluorosulfonyl)imide. Based on the total mass of the electrolyte solution, a mass percentage of the first fluorine-containing lithium salt additive is f1%, satisfying: $0.08 \leq f1 \leq 6$; and/or

the electrolyte solution includes a second fluorine-containing lithium salt additive; the second fluorine-containing lithium salt additive includes at least one of lithium difluoro(oxalato)borate, lithium difluoro(oxalato)phosphate, or lithium tetrafluoroborate, and, based on the total mass of the electrolyte solution, a mass percentage of the second fluorine-containing lithium salt additive is f2%, satisfying: $0.01 \leq f2 \leq 3$.

In some embodiments in the first aspect of this application, the electrolyte solution further includes a polynitrile compound. The polynitrile compound includes at least one of succinonitrile, glutaronitrile, adiponitrile, 1,4-dicyano-2-butene, 1,2-bis(2-cyanoethoxy)ethane, 1,3,6-hexanetricarbonitrile, or 1,2,3-tris(2-cyanoethoxy)propane. Based on the total mass of the electrolyte solution, a mass percentage of the polynitrile compound is g%, satisfying: $0.08 \leq g \leq 3$.

In some embodiments in the first aspect of this application, the electrolyte solution further includes an aromatic compound. The aromatic compound includes at least one of biphenyl, cyclohexylbenzene, fluorobenzene, or difluorobiphenyl. Based on the total mass of the electrolyte solution, a mass percentage of the aromatic compound is h%, satisfying: $0.008 \leq h \leq 7$.

In some embodiments in the first aspect of this application, the positive electrode includes a positive active material layer. A compaction density j of the positive active material layer is 1 g/cm$^3$ to 4 g/cm$^3$.

In some embodiments in the first aspect of this application, the positive active material layer includes a positive active material. $D_{v50}$ of the positive active material is k, and k is 2 $\mu$m to 40 $\mu$m. A thickness of the separator is i, satisfying: i is 3 µm to 20 µm, and 5 µm $\leq$ i + k $\leq$ 60 µm.

A second aspect of this application provides an electronic device. The electronic device includes the electrochemical device according to the first aspect of this application.

This application provides an electrochemical device and an electronic device containing same. The electrochemical device includes a positive electrode, a negative electrode, a separator, and an electrolyte solution. The electrolyte solution includes an additive. An electrolyte retention coefficient of the electrochemical device is a g/Ah, satisfying: $0.5 \leq a \leq 3.5$. Based on a total mass of the electrolyte solution, a mass percentage of the additive is b%, satisfying: $0.005 \leq b \leq 3$. The additive includes at least one of lithium bis(oxalato)borate, vinyl ethylene carbonate, methylene methane disulfonate, triallyl phosphate, trifluoromethyl ethylene carbonate, or prop-1-ene-1,3-sultone. In the electrochemical device of this application, an appropriate electrolyte retention amount is maintained, and the foregoing additive is added in the electrolyte solution in an appropriate amount, thereby effectively improving the low-temperature discharge performance and safety performance of the electrochemical device. The electronic device containing the electrochemical device also exhibits good low-temperature discharge performance and safety performance.

## DETAILED DESCRIPTION OF EMBODIMENTS

To make the objectives, technical solutions, and advantages of this application clearer, the following describes this application in more detail with reference to embodiments. Evidently, the described embodiments are merely a part of but not all of the embodiments of this application. All other embodiments derived by a person of ordinary skill in the art based on the embodiments of this application fall within the protection scope of this application.

It is hereby noted that in the description of this application, this application is construed by using a lithium-ion battery as an example of an electrochemical device, but the electrochemical device according to this application is not limited to the lithium-ion battery. A person skilled in the art understands that the following description is merely illustrative without limiting the protection scope of this application.

A first aspect of this application provides an electrochemical device. The electrochemical device includes a positive electrode, a negative electrode, a separator, and an electrolyte solution. The electrolyte solution includes an additive. An electrolyte retention coefficient of the electrochemical device is a g/Ah, satisfying: $0.5 \leq a \leq 3.5$. Based on a total mass of the electrolyte solution, a mass percentage of the additive is b%, satisfying: $0.005 \leq b \leq 3$. The additive includes at least one of lithium bis(oxalato)borate, vinyl ethylene carbonate, methylene methane disulfonate, triallyl phosphate, trifluoromethyl ethylene carbonate, or prop-1-ene-1,3-sultone. For example, the value of a may be 0.5, 0.8, 1, 1.5, 2, 2.5, 3, 3.2, 3.5, or a value falling within a range formed by any two thereof; and the value of b may be 0.005, 0.01, 0.02, 0.03, 0.05, 0.1, 0.2, 0.5, 1, 1.5, 2, 2.5, 2.8, 3, or a value falling within a range formed by any two thereof. Without being limited to any theory, the applicant hereof finds through research that in the electrochemical device of this application, an appropriate electrolyte retention amount is maintained, and the foregoing additive is added in the electrolyte solution in an appropriate amount, thereby effectively improving the low-temperature discharge performance and safety performance of the electrochemical device.

Without being limited to any theory, the applicant finds that, when the value of the electrolyte retention coefficient a is overly low, for example, lower than 0.5 g/Ah, the active material is not sufficiently infiltrated during the chemical formation, the additive in the electrolyte solution can hardly coordinate with the active material effectively, and the low-temperature discharge performance of the electrochemical device is not improved by the formation of a functional interface. When the value of the electrolyte retention coefficient a is overly high, for example, higher than 3.5 g/Ah, the protective effect of the electrode interface on the active material is weakened, the active lithium constituent in the lithium-ion battery is consumed continuously, and the capacity of lithium-ion battery fades rapidly. By adding the specified additives to an electrochemical system in which a specified amount of electrolyte solution is retained, a protective interface film can be formed between the positive electrode and the negative electrode. However, when the content of the additives is overly high, for example, higher than 3%, the interfacial resistance is increased and causes an impact on the low-temperature discharge performance and the discharge temperature increment. Without being limited to any theory, by selecting the additives specified above and controlling the values of a and b to fall within the specified ranges, this application can improve the low-temperature discharge performance and safety performance of the electrochemical device.

In some embodiments in the first aspect of this application, the electrolyte retention coefficient of the electrochemical device, denoted as a g/Ah, is 1 g/Ah to 2.5 g/Ah and satisfies: $-1.6 \leq \ln(a \times b) \leq 1.8$. For example, the value of a may be 1, 1.2, 1.5, 1.8, 2, 2.2, 2.5, or a value falling within a range formed by any two thereof; and the value of $\ln(a \times b)$ may be -1.6, -1.3, -1.0, -0.5, 0, 0.05, 0.1, 0.2, 0.5, 0.7, 1, 1.2, 1.5, 1.8, or a value falling within a range formed by any two thereof. The applicant hereof finds that, by controlling the values of a and $\ln(a \times b)$ to fall within the above ranges, the low-temperature discharge performance and safety performance of the electrochemical device can be further improved.

In some embodiments in the first aspect of this application, a tortuosity d of the separator is 1.5 to 3, satisfying: $0.6 \leq d/a \leq 3$. For example, the value of d may be 1.5, 1.8, 2, 2.2, 2.5, 2.8, 3, or a value falling within a range formed by any two thereof; and the value of d/a may be 0.6, 0.8, 1, 1.2, 1.5, 1.8, 2, 2.2, 2.5, 2.8, 3, or a value falling within a range formed by any two thereof. The applicant hereof finds that, by controlling the values of d and d/a to fall within the above ranges, the electrochemical device can be endowed with good low-temperature discharge performance and safety performance.

The applicant hereof finds that, increasing the tortuosity d of the separator can improve the effect of the separator in obstructing burrs and lithium dendrites, and in turn, improve the safety performance of the electrochemical device. When the tortuosity d is overly low, for example, lower than 1.5, the protective effect of the separator for the electrochemical device is inferior. When the tortuosity d is overly high, for example, higher than 3, the ionic conductivity is impaired, and in turn, the low-temperature discharge performance of the electrochemical device is impaired. By controlling the values of d and d/a to fall within the above ranges, the electrochemical device can be endowed with good low-temperature discharge performance and safety performance.

In some embodiments in the first aspect of this application, the electrolyte solution further includes vinylene carbonate. Based on the total mass of the electrolyte solution, a mass percentage of the vinylene carbonate is c%, satisfying: $0.005 \leq c \leq 3$, and $0.003 \leq c/a \leq 3$. For example, the value of c may be 0.005, 0.01, 0.02, 0.03, 0.05, 0.1, 0.2, 0.5, 1, 1.5, 2, 2.5, 2.8, 3, or a value falling within a range formed by any two thereof; and the value of c/a may be 0.003, 0.005, 0.01, 0.02, 0.03, 0.05, 0.1, 0.2, 0.5, 1, 1.5, 2, 2.5, 2.8, 3, or a value falling within a range formed by any two thereof. By controlling the values of c and c/a to fall within the above ranges, the electrochemical device can be endowed with good performance.

Vinylene carbonate (VC) added into the electrolyte solution can further modify the solid electrolyte interface (SEI) film of the negative electrode, so that the formed SEI film is more compact in structure. The SEI film of higher performance can preclude the electrolyte solution from further decomposing, thereby further improving the performance of the electrochemical device. However, when the content of the vinylene carbonate is overly high, for example, higher than 3%, the interfacial resistance will increase, and the lithium plating is prone to occur at the interface, thereby being unfavorable to the safety performance of the electrochemical device. Therefore, the values of c and c/a are controlled to fall within the above ranges.

In some embodiments in the first aspect of this application, the electrolyte solution further includes a sulfonate ester compound. The type of the sulfonate ester compound is not particularly limited herein, as long as the objectives of this application can be achieved. For example, the sulfonate ester compound may include at least one of 1,3-propane sultone, 1,4-butane sultone, 1,3-propane disulfonic anhydride, or 2,4-butane sultone. Based on the total mass of the electrolyte solution, a mass percentage of the sulfonate ester compound is e%, satisfying: $0.01 \leq e \leq 5$. For example, the value of e may be 0.01, 0.1, 0.2, 0.5, 1, 1.5, 2, 2.5, 3, 3.5, 4, 4.5, 5, or a value falling within a range formed by any two thereof. The sulfonate ester compound added in the electrolyte solution can significantly improve the low-temperature discharge performance of the electrochemical device. The improvement effect intensifies with the increase of the content of the sulfonate ester compound. However, when the content of the sulfonate ester compound is overly high, for example, higher than 5%, the low-temperature discharge performance of the electrochemical device stops improving. By controlling the value of e to fall within the above range, the low-temperature discharge performance and safety performance of the electrochemical device can be further improved.

In some embodiments in the first aspect of this application, the electrolyte solution further includes a fluorine-containing lithium salt additive. The type of the fluorine-containing lithium salt additive is not particularly limited herein, as long as the objectives of this application can be achieved. For example, the electrolyte solution includes a first fluorine-containing lithium salt additive. The first fluorine-containing lithium salt additive includes at least one of lithium bis(trifluoromethanesulfonyl)imide or lithium bis(fluorosulfonyl)imide.

Based on the total mass of the electrolyte solution, a mass percentage of the first fluorine-containing lithium salt additive is f1%, satisfying: $0.08 \leq f1 \leq 6$; and/or the electrolyte solution includes a second fluorine-containing lithium salt additive; the second fluorine-containing lithium salt additive includes at least one of lithium difluoro(oxalato)borate, lithium difluoro(oxalato)phosphate, or lithium tetrafluoroborate, and, based on the total mass of the electrolyte solution, a mass percentage of the second fluorine-containing lithium salt additive is f2%, satisfying: $0.01 \leq f2 \leq 3$.

In this application, the value of f1 may be 0.08, 0.1, 0.2, 0.5, 1, 1.5, 2, 2.5, 3, 3.5, 4, 4.5, 5, 5.5, 6, or a value falling within a range formed by any two thereof; the value of f2 may be 0.01, 0.1, 0.2, 0.5, 1, 1.2, 1.5, 1.8, 2, 2.2, 2.5, 2.8, 3, or a value falling within a range formed by any two thereof. The fluorine-containing lithium salt additive can form a film at the negative electrode. The SEI film of higher performance can protect the negative electrode and improve the low-temperature discharge performance of the electrochemical device. However, when the content of the fluorine-containing lithium salt additive is high, the formed SEI film is thick, and the interfacial resistance increases.

In this application, when the first fluorine-containing lithium salt additive is added to the electrolyte solution, f1 is controlled to fall within the range of 0.08% to 6%, thereby improving the low-temperature discharge performance and safety performance of the electrochemical device. In this application, when the second fluorine-containing lithium salt additive is added to the electrolyte solution, f2 is controlled to fall within the range of 0.01% to 3%, thereby improving the low-temperature discharge performance and safety performance of the electrochemical device. The first fluorine-containing lithium salt additive and the second lithium salt additive can be used separately or in combination.

In some embodiments in the first aspect of this application, the electrolyte solution further includes a polynitrile compound. The type of the polynitrile compound is not particularly limited herein, as long as the objectives of this application can be achieved. For example, the polynitrile compound may include at least one of succinonitrile, glutaronitrile, adiponitrile, 1,4-dicyano-2-butene, 1,2-bis(2-cyanoethoxy)ethane, 1,3,6-hexanetricarbonitrile, or 1,2,3-tris(2-cyanoethoxy)propane. Based on the total mass of the electrolyte solution, a mass percentage of the polynitrile compound is g%, satisfying: $0.08 \leq g \leq 3$. For example, the value of g may be 0.08, 0.1, 0.2, 0.5, 1, 1.2, 1.5, 1.8, 2, 2.2, 2.5, 2.8, 3, or a value falling within a range formed by any two thereof. The polynitrile compound can form a polymer film on the positive electrode to protect the positive electrode effectively. By controlling the mass percentage of the polynitrile compound to fall within the above range, the low-temperature discharge performance and safety performance of the electrochemical device can be improved effectively. By selecting the foregoing polynitrile compound, this application can further enhance the low-temperature discharge performance and safety performance of the electrochemical device.

In some embodiments in the first aspect of this application, the electrolyte solution further includes an aromatic compound. The type of the aromatic compound is not particularly limited herein, as long as the objectives of this application can be achieved. For example, the aromatic compound may include at least one of biphenyl, cyclohexylbenzene, fluorobenzene, or difluorobiphenyl. Based on the total mass of the electrolyte solution, a mass percentage of the aromatic compound is h%, satisfying: $0.008 \leq h \leq 7$. For example, the value of h may be 0.008, 0.01, 0.02, 0.05, 0.1, 0.5, 1, 1.5, 2, 2.5, 3, 4, 4.5, 5, 5.5, 6, 6.5, 7, or a value falling within a range formed by any two thereof, such as 1 to 5. In this application, an aromatic compound is added to the electrolyte solution. Because the aromatic compound can electropolymerize, a resulting polymer film can prevent thermal runaway, thereby significantly improving the hot-oven safety performance of the electrochemical device and endowing the electrochemical device with high safety performance. Preferably, when the value of h satisfies $1 \leq h \leq 5$, the electrochemical device exhibits higher safety performance.

In this application, the electrolyte solution may further include another nonaqueous solvent. The other nonaqueous solvent is not particularly limited herein, as long as the objectives of this application can be achieved. For example, the nonaqueous solvent may include, but is not limited to, at least one of a carboxylate ester compound, an ether compound, or another organic solvent. The carboxylate ester compound may include, but is not limited to, at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, 2,2-ethyl difluoroacetate, valerolactone, butyrolactone, ethyl 2-fluoroacetate, ethyl 2,2-difluoroacetate, or ethyl trifluoroacetate. The ether compound may include, but is not limited to, at least one of monoglyme, diglyme, tetraglyme, dibutyl ether, tetrahydrofuran, 2-methyltetrahydrofuran, bis(2,2,2-trifluoroethyl)ether, 1,3-dioxane, or 1,4-dioxane. The other organic solvent may include, but is not limited to, at least one of ethyl vinyl sulfone, methyl isopropyl sulfone, isopropyl sec-butyl sulfone, sulfolane, dimethyl carbonate, diethyl carbonate, ethyl methyl carbonate, methyl propyl carbonate, ethyl propyl carbonate, dipropyl carbonate, ethylene carbonate, propylene carbonate, butylene carbonate, or bis(2,2,2-trifluoroethyl)carbonate. Based on the total mass of the electrolyte solution, the total mass percentage of the other nonaqueous solvents is 5% to 90%, for example, 5%, 10%, 15%, 20%, 25%, 30%, 35%, 40%, 45%, 50%, 55%, 60%, 65%, 70%, 75%, 80%, 85%, 90%, or a value falling within a range formed by any two thereof.

In some embodiments in the first aspect of this application, the positive electrode includes a positive active material layer. A compaction density j of the positive active material layer is 1 g/cm$^3$ to 4 g/cm$^3$. For example, the value of j may be 1, 1.2, 1.5, 1.8, 2, 2.2, 2.5, 2.7, 3, 3.2, 3.5, 3.7, 4, or a value falling within a range formed by any two thereof. The increase in the compaction density of the positive active material layer can increase the energy density of the electrochemical device. However, the compaction density, if overly high, for example, higher than 4 g/cm$^3$, may result in poor infiltration for the electrode plate, and deteriorate the kinetics of the electrochemical device. The applicant hereof finds that, by controlling the value of j to fall within the above range, the electrochemical device is endowed with good low-temperature discharge performance.

In some embodiments in the first aspect of this application, the positive active material layer includes a positive active material. $D_{v50}$ of the positive active material is k, and k is 2 μm to 40 μm. A thickness of the separator is i, satisfying: i is 3 μm to 20 μm, and 5 μm $\leq i + k \leq 60$ μm. For example, the value of k may be 2, 3, 5, 8, 10, 13, 15, 18, 20, 22, 25, 27, 30, 32, 35, 37, 40, or a value falling within a range formed by any two thereof; the value of i may be 3, 5, 7, 8, 10, 12, 15, 16, 18, 20, or a value falling within a range formed by any two thereof; the value of i+k may be 5, 10, 13, 15, 18, 20, 22, 25, 27, 30, 35, 40, 45, 48, 50, 53, 55, 60, or a value falling within a range formed by any two thereof. Without being limited to any theory, the applicant hereof finds that, by controlling the values of k, i, and i+k to fall within the above ranges, this application increases the energy density of the electrochemical device, and improves the low-temperature discharge performance of the electrochemical device.

In this application, the term "$D_{v50}$" is a diameter value of particles corresponding to a point at which a cumulative volume percentage of measured particles reaches 50% of a total volume of all sample particles in a volume-based particle size distribution curve viewed from a small-diameter side, or, in other words, is a diameter value below which 50% of the total volume of all sample particles lies. The particle diameter is measured with a laser particle size analyzer.

The positive electrode of this application may further include a positive current collector. The positive current collector is not particularly limited herein, as long as the objectives of this application can be achieved. For example, the positive current collector may include aluminum foil, aluminum alloy foil, a composite current collector, or the like. The positive active material layer in this application includes a positive active material. The type of the positive active material is not particularly limited herein, as long as the objectives of this application can be achieved. For example, the positive active material may include at least one of lithium nickel cobalt manganese oxide (811, 622, 523, 111), lithium nickel cobalt aluminum oxide, lithium iron phosphate, a lithium-rich manganese-based material, lithium cobalt oxide, lithium manganese oxide, lithium manganese iron phosphate, lithium titanium oxide, or the like. In this application, the positive active material may further include a non-metallic element. For example, the non-metallic elements include at least one of fluorine, phosphorus, boron, chlorine, silicon, or sulfur. Such elements can further improve the stability of the positive active material. In this application, the thicknesses of the positive current collector and the positive active material layer are not particularly limited, as long as the objectives of this application can be achieved. For example, the thickness of the positive current collector is 5 $\mu$m to 20 $\mu$m, and preferably 6 $\mu$m to 18 $\mu$m. The thickness of the positive active material layer on a single side is 30 $\mu$m to 120 $\mu$m. In this application, the positive active material layer may be disposed on one surface of the positive current collector in a thickness direction or on both surfaces of the positive current collector in the thickness direction. It is hereby noted that the "surface" here may be the entire region of the positive current collector, or a partial region of the positive current collector, without being particularly limited herein, as long as the objectives of the application can be achieved. Optionally, the positive electrode may further include a conductive layer. The conductive layer is located between the positive current collector and the positive active material layer. The composition of the conductive layer is not particularly limited, and may be a conductive layer commonly used in the art. The conductive layer includes a conductive agent and a binder.

The negative electrode is not particularly limited herein, as long as the objectives of this application can be achieved. For example, the negative electrode includes a negative current collector and a negative electrode material layer. The negative current collector is not particularly limited herein, as long as the objectives of this application can be achieved. For example, the negative current collector may be copper foil, copper alloy foil, nickel foil, stainless steel foil, titanium foil, foamed nickel, foamed copper, a composite current collector, or the like. The negative electrode material layer in this application includes a negative electrode material. The type of the negative electrode material is not particularly limited herein, as long as the objectives of this application can be achieved. For example, the negative electrode material may include at least one of natural graphite, artificial graphite, mesocarbon microbeads (MCMB), hard carbon, soft carbon, silicon, a silicon-carbon composite, $SiO_x$ (0 < x < 2), metallic lithium, or the like. The thicknesses of the negative current collector and the negative electrode material layer are not particularly limited herein, as long as the objectives of this application can be achieved. For example, the thickness of the negative current collector is 6 $\mu$m to 10 $\mu$m, and the thickness of the negative electrode material layer on a single side is 30 $\mu$m to 150 $\mu$m. In this application, the negative electrode material layer may be disposed on one surface of the negative current collector in a thickness direction or on both surfaces of the negative current collector in the thickness direction. It is hereby noted that the "surface" here may be the entire region of the negative current collector, or a partial region of the negative current collector, without being particularly limited herein, as long as the objectives of the application can be achieved. Optionally, the negative electrode may further include a conductive layer. The conductive layer is located between the negative current collector and the negative material layer. The composition of the conductive layer is not particularly limited, and may be a conductive layer commonly used in the art. The conductive layer includes a conductive agent and a binder.

The conductive agent is not particularly limited as long as the objectives of this application can be achieved. For example, the conductive agent may include at least one of conductive carbon black (Super P), carbon nanotubes (CNTs), carbon nanofibers, flake graphite, acetylene black, carbon black, Ketjen black, carbon dots, carbon nanotubes, or graphene. The binder is not particularly limited as long as the objectives of this application can be achieved. For example, the binder may include at least one of polypropylene alcohol, sodium polyacrylate, potassium polyacrylate, lithium polyacrylate, polyimide, polyamide imide, styrene butadiene rubber (SBR), polyvinyl alcohol (PVA), polyvinylidene fluoride, polyvinylidene difluoride (PVDF), polytetrafluoroethylene (PTFE), polyvinyl butyral (PVB), water-based acrylic resin, carboxymethyl cellulose (CMC), or sodium carboxymethyl cellulose (CMC-Na), or the like.

The separator in this application may include a substrate layer and a surface treatment layer. The substrate layer may be a non-woven fabric, film or composite film, which, in each case, is porous. The material of the substrate layer may include at least one of polyethylene (PE), polypropylene (PP), polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be at least one selected from polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, polyhexafluoropropylene, or the like. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, poly(vinylidene difluoride-co-hexafluoropropylene), or the like.

The electrochemical device in this application is not particularly limited, and may be any device in which an electrochemical reaction occurs. In some embodiments, the electrochemical device may include, but not limited to, a lithium metal secondary battery, a lithium-ion secondary battery (lithium-ion battery), a lithium polymer secondary battery, a lithium-ion polymer secondary battery, or the like.

The process of preparing the electrochemical device is well known to a person skilled in the art, and is not particularly limited herein. For example, the preparation process may include, but without being limited to, the following steps: stacking the positive electrode, the separator, and the negative electrode in sequence, and performing operations such as winding and folding as required to obtain a jelly-roll electrode assembly; putting the electrode assembly into a package, injecting the electrolyte solution into the package, and sealing the package to obtain an electrochemical device; or, stacking the positive electrode, the separator, and the negative electrode in sequence, and then fixing the four corners of the entire stacked structure by use of adhesive tape to obtain a stacked-type electrode assembly, putting the electrode assembly into a package, injecting the electrolyte solution into the package, and sealing the package to obtain an electrochemical device. In addition, an overcurrent prevention element, a guide plate, and the like may be placed into a pocket as required, so as to prevent the rise of internal pressure, overcharge, and overdischarge of the electrochemical device.

A second aspect of this application provides an electronic device. The electronic device includes the electrochemical device according to the first aspect of this application. The electronic device exhibits good low-temperature discharge performance and safety performance.

The electronic devices of this application are not particularly limited, and may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, and the like.

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

**Test methods and devices**

**Low-temperature discharge test:**

Putting a lithium-ion battery into a temperature-controlled chamber, adjusting the temperature to 25 °C, and leaving the battery to stand for 30 minutes so that the temperature of the lithium-ion battery is constant. Discharging the constant-temperature lithium-ion battery at a current of 0.5 C until the voltage reaches 2.8 V, and then charging the battery at a current of 0.5C until the voltage reaches 4.2 V, and then charging the battery at a constant voltage of 4.2 V until the current is less than or equal to 0.05C. Similarly, discharging the battery at a temperature of 25 °C and a current of 0.5C until the voltage reaches 3.0 V, and recording a discharge capacity at this time as an initial discharge capacity. Charging the battery at a current of 0.5C at a temperature of 25 °C until the voltage reaches 4.2 V, and then charging the battery at a constant voltage of 4.2 V until the current is less than or equal to 0.05C. Leaving the lithium-ion battery to stand at a temperature of -20 °C for 30 minutes so that the temperature of the lithium-ion battery is the same as the outside temperature. Discharging the battery at a temperature of -20 °C and a current of 0.5C until the voltage reaches 3.0 V, and recording a discharge capacity at this time as a low-temperature discharge capacity.

-20 °C low-temperature discharge capacity retention rate = (low-temperature discharge capacity/initial discharge capacity) $\times$ 100%.

**Temperature increment test:**

Leaving a lithium-ion battery to stand at 45 °C for 5 minutes, and then discharging the lithium-ion battery at a current of 0.5C until the voltage reaches 2.8 V, and leaving the battery to stand for 60 minutes. Subsequently, charging the battery at a constant current of 0.5C until the voltage reaches 4.2 V, and then charging the battery at a constant voltage until the current is less than or equal to 0.05C, and leaving the battery to stand for 60 minutes. Discharging the lithium-ion battery at a constant current of 5C until the voltage reaches 2.8 V, and obtaining a maximum temperature during the discharge at a 5C current. Subtracting the test temperature of 45 °C from the maximum temperature to obtain a temperature increment of the battery discharged at 5C (hereinafter referred to as "temperature increment").

**Overcharge test:**

Leaving a lithium-ion battery to stand at a room temperature for 5 minutes, and then discharging the battery at a constant current of 1C rate until the voltage reaches 2.8 V. Subsequently, charging the battery at a constant current of 1C until the voltage reaches 4.2 V, and then charging the battery at a constant voltage until the current is less than or equal to 0.05C, and then leaving the battery to stand for 30 minutes. Subsequently, transferring the lithium-ion battery into an overcharge region for further test, and charging the battery at a constant current of 1C until the voltage reaches 5V, and then charging the battery at a constant voltage of 5V for 3 hours. Determining pass of the test if the lithium-ion battery neither catches fire nor explodes. Testing the batteries in groups, where each group contains 10 lithium-ion batteries prepared in each embodiment or each comparative embodiment. Recording the number of batteries that have passed the test.

**Testing the high-temperature storage performance:**

Storing a fully charged battery: Leaving a lithium-ion battery to stand in a 25 °C thermostat for 5 minutes, and then charging the battery at a constant current rate of 1C until the voltage reaches 4.2 V. Subsequently, charging the battery at a constant voltage until the current is less than or equal to 0.05C, and then leaving the battery to stand for 5 minutes. Discharging the battery at a constant current rate of 1C until the voltage reaches 2.8 V, and recording the discharge capacity at this time as an initial discharge capacity. Subsequently, charging the battery at a constant current rate of 1C until the voltage reaches 4.2 V, and charging the battery at a constant voltage until the current is less than or equal to 0.05C. Subsequently, putting the fully charged lithium-ion battery into a 60 °C oven and storing the battery for 30 days. Taking out the lithium-ion battery at the end of the 30-day storage, and leaving the lithium-ion battery to stand in a 25 °C thermostat for 3 hours. Testing the capacity recovery in the following process: Discharging the battery at a constant current rate of 1C until the voltage reaches 2.8 V, and then charging the battery at a constant current rate of 1C until the voltage reaches 4.2 V, and then charging the battery at a constant voltage until the current is less than or equal to 0.05C. Subsequently, discharging the battery at a constant current rate of 1C until the voltage reaches 2.8 V, and recording the discharge capacity at this time as a post-storage discharge capacity.

Capacity recovery rate = post-storage discharge capacity/initial discharge capacity $\times$ 100%.

**Hot-oven test:**

Putting the lithium-ion battery into a 25 °C thermostat, and leaving the battery to stand for 30 minutes so that the temperature of the lithium-ion battery is constant. Charging the battery at a constant current of 0.5C until the voltage reaches 4.2 V, and then charging the battery at a constant voltage until the current drops to 0.05C. Subsequently, transferring the lithium-ion battery into a hot oven, increasing the temperature to 140 °C at a speed of 2 °C/min, and keeping the temperature for 30 minutes. Determining pass of the test if the lithium-ion battery neither catches fire nor explodes. Testing the batteries in groups, where each group contains 10 lithium-ion batteries prepared in each embodiment or each comparative embodiment. Recording the number of batteries that have passed the test.

**Testing the electrolyte retention coefficient:**

Calculating the electrolyte retention coefficient of the lithium-ion battery according to the following expression:

Electrolyte retention coefficient = electrolyte retention amount/first-cycle discharge specific capacity of lithium-ion battery.

**Testing the electrolyte retention amount:**

Weighing one lithium-ion battery and denoting the weight as $m_0$, and then disassembling the lithium-ion battery, and centrifuging the battery to separate out the electrolyte solution. Putting the aluminum laminated film, separator, positive electrode plate, negative electrode plate, and tab into an acetonitrile solution, and then taking out and oven-drying the aluminum laminated film, separator, positive electrode plate, negative electrode plate, and tab, and weighing them and denoting the weight as $m_1$. Calculating the electrolyte retention amount as $m_0$-$m_1$.

**Testing the tortuosity of the separator:**

Calculating the tortuosity of the separator according to a McMullin formula:

$$(\text{tortuosity d})^2 = N_M \times \varepsilon.$$

In the formula, $N_M$ is a McMullin number obtained by dividing $\sigma_s$ by $\sigma_e$, where $\sigma_s$ is the resistivity of the separator, $\sigma_e$ is the conductivity of the electrolyte solution, and $\varepsilon$ is the porosity of the separator.

**Testing the compaction density of the positive active material layer:**

Taking a positive electrode plate coated with a positive active material on both sides, and cutting out 20 small discs from the electrode plate to form specimens, where the area of each disc is 1540.25 mm$^2$. Measuring the weight and thickness of the specimens. Calculating the compaction density of the active material according to the following formula: compaction density = (weight of a small disc - weight of the substrate)/(1540.25 $\times$ (thickness of the small disc coated with the active material on both sides - thickness of the substrate)) $\times$ 1000. Averaging out the measured values of the specimens to obtain the compaction density of the positive active material layer in each embodiment.
The weight and thickness of the substrate (copper foil) are obtained by measuring the weight and thickness of a region uncoated with the active material.
Weight of the small disc and weight of the substrate: (unit: mg)
Thickness of the small disc coated with the active material on both sides and thickness of the substrate: (unit: $\mu$m).

**Testing the particle size of the positive active material:**

Testing the particle size distribution of the positive active material by using MasterSizer 2000.

**Measuring the thickness of the separator:**

Measuring the thickness of the separator by using a ten-thousandth micrometer.

**Embodiment 1-1**

**<Preparing an electrolyte solution>**

Mixing ethylene carbonate (EC), lithium hexafluorophosphate (LiPF$_6$), lithium bis(oxalato)borate (LiBOB), and diethyl carbonate (DEC) evenly in an argon atmosphere glovebox in which the water content is less than 10 ppm, so as to obtain an electrolyte solution. Based on the total mass of the electrolyte solution, the mass percentage of EC is 26%, the mass percentage of the LiPF$_6$ is 11%, the mass percentage of the LiBOB is 0.005%, and the remainder is the mass percentage of the DEC.

**<Preparing a positive electrode plate>**

Mixing lithium nickel cobalt manganese oxide (LiNi$_{0.5}$Co$_{0.2}$Mn$_{0.3}$O$_2$) as a positive electrode material, conductive carbon black (Super P) as a conductive agent, and polyvinylidene difluoride (PVDF) as a binder at a mass ratio of 96: 2: 2, and then adding N-methyl pyrrolidone (NMP) as a solvent, stirring well to obtain a positive electrode slurry with a solid content of 75 wt%. Applying the positive electrode slurry evenly onto both surfaces of a 10 $\mu$m-thick positive current collector aluminum foil, and oven-drying the slurry at 90 °C. Cold-pressing the current collector to obtain a positive electrode plate coated with a 100 $\mu$m-thick positive active material layer. Cutting the positive electrode plate into a size of 74 mm $\times$ 867 mm for future use.

**<Preparing a negative electrode plate>**

Mixing artificial graphite as a negative electrode material, Super P as a conductive agent, sodium carboxymethyl cellulose (CMC) as a thickener, and styrenebutadiene rubber (SBR) as a binder at a mass ratio of 95: 2: 2: 1, and then adding deionized water as a solvent, stirring well to obtain a negative electrode slurry with a solid content of 70 wt%. Applying the negative electrode slurry evenly onto both surfaces of an 8 $\mu$m-thick negative current collector copper foil, and oven-drying the slurry at 90 °C. Cold-pressing the current collector to obtain a negative electrode plate coated with a 150 μm-thick negative active material layer. Cutting the negative electrode plate into a size of 74 mm × 867 mm, welding tabs, and leaving the negative electrode plate for future use.

**<Preparing a separator>**

Using a 5 μm-thick polyethylene (PE) porous thin film as a separator.

**<Preparing a lithium-ion battery>**

Stacking the positive electrode plate, the separator, and the negative electrode plate sequentially, letting the separator be located between the positive electrode plate and the negative electrode plate to serve a separation function, winding the plates to obtain a bare cell, placing the bare cell into an outer package foil, injecting the prepared electrolyte solution into the cell that is dried, and performing steps such as vacuum packaging, standing, chemical formation, shaping, and capacity test to complete preparing the lithium-ion battery.

**Embodiments 1-2 to 1-17**

Identical to Embodiment 1-1 except that the relevant preparation parameters and performance parameters are changed according to Table 1.

**Comparative Embodiments 1-1 to 1-4**

Identical to Embodiment 1-1 except that the relevant preparation parameters and performance parameters are changed according to Table 1.

**Table 1**

| | Electrolyte retention coefficient a (g/Ah) | Additive | | | | ln(a× b) | Capacity retention rate of battery discharged at -20 °C low temperature (%) | Temperature increment of battery discharged at 45 °C and 5C (°C) |
| | | Mass percentage b (%) | | | | | | |
| | | Lithium bis(oxalato)borate | Triallyl phosphate | Prop-1-ene-1,3-sultone | Total content | | | |
| Embodiment 1-1 | 0.5 | 0.05 | / | / | 0.05 | - 3.69 | 77.4 | 6 |
| Embodiment 1-2 | 1 | 0.44 | / | / | 0.44 | - 0.82 | 79.6 | 6 |
| Embodiment 1-3 | 2 | 0.44 | / | / | 0.44 | - 0.13 | 81.8 | 5 |
| Embodiment 1-4 | 2.3 | 0.44 | / | / | 0.44 | 0.01 | 83.3 | 4 |
| Embodiment 1-5 | 2.5 | 0.44 | / | / | 0.44 | 0.10 | 83.2 | 4 |
| Embodiment 1-6 | 3.5 | 3 | / | / | 3 | 2.35 | 76.9 | 7 |
| Embodiment 1-7 | 2.3 | 0.089 | / | / | 0.089 | - 1.59 | 81.6 | 3 |
| Embodiment 1-8 | 2.3 | 0.26 | / | / | 0.26 | - 0.51 | 84.9 | 3 |
| Embodiment 1-9 | 2.3 | 0.89 | / | / | 0.89 | 0.72 | 82.7 | 5 |

(continued)

| | Electrolyte retention coefficient a (g/Ah) | Additive | | | | ln(a× b) | Capacity retention rate of battery discharged at - 20 °C low temperature (%) | Temperature increment of battery discharged at 45 °C and 5C (°C) |
|---|---|---|---|---|---|---|---|---|
| | | Mass percentage b (%) | | | | | | |
| | | Lithium bis(oxalato)borate | Triallyl phosphate | Prop-1-ene-1,3-sultone | Total content | | | |
| Embodiment 1-10 | 2.3 | 2.6 | / | / | 2.6 | 1.79 | 79.5 | 6 |
| Embodiment 1-11 | 2.3 | 0.26 | 0.05 | / | 0.31 | - 0.34 | 84.9 | 3 |
| Embodiment 1-12 | 2.3 | 0.26 | 0.2 | / | 0.46 | 0.06 | 85.2 | 3 |
| Embodiment 1-13 | 2.3 | 0.26 | 1.75 | / | 2.01 | 1.53 | 81.6 | 4 |
| Embodiment 1-14 | 2.3 | 0.26 | 2.17 | / | 2.43 | 1.72 | 80.7 | 6 |
| Embodiment 1-15 | 2.3 | 0.26 | 0.2 | 0.087 | 0.547 | 0.23 | 85.3 | 4 |
| Embodiment 1-16 | 2.3 | 0.26 | 0.2 | 0.43 | 0.89 | 0.72 | 85.8 | 5 |
| Embodiment 1-17 | 2.3 | 0.26 | 1.73 | 0.43 | 2.42 | 1.72 | 81.8 | 6 |
| Comparative Embodiment 1-1 | 0.3 | 0.26 | / | / | 0.26 | - 2.55 | 63.3 | 8 |
| Comparative Embodiment 1-2 | 4 | 0.26 | / | / | 0.26 | 0.04 | 73.4 | 9 |
| Comparative Embodiment 1-3 | 2.3 | / | / | / | / | / | 75.5 | 4 |
| Comparative Embodiment 1-4 | 2.3 | 0.85 | 2.55 | 0.85 | 4.25 | 2.29 | 71.2 | 9 |
| "/" indicates absence of this material or constituent. | | | | | | | | |

As can be seen from Embodiments 1-1 to 1-17 and Comparative Embodiments 1-1 to 1-4, when the value of the electrolyte retention coefficient a is 0.5 to 3.5 and the value of the mass percentage b of the additive is 0.005 to 3, the lithium-ion battery exhibits good low-temperature discharge performance and safety performance; when the values of a and b satisfy $1 \le a \le 2.5$ and $-1.6 \le \ln(a \times b) \le 1.8$, the low-temperature discharge performance and safety performance of the lithium-ion battery can be further improved.

**Embodiments 2-1 to 2-10**

Identical to Embodiment 1-16 except that the relevant preparation parameters and performance parameters are changed according to Table 2.

**Table 2**

|  | Electrolyte retention coefficient a (g/Ah) | Tortuosity d of separator | d/a | Capacity retention rate of battery discharged at -20 °C low temperature (%) | Overcharge test |
|---|---|---|---|---|---|
| Embodiment 1-16 | 2.3 | 2.1 | 0.91 | 85.8 | 9/10 passed |
| Embodiment 2-1 | 2.3 | 1.5 | 0.65 | 85.3 | 8/10 passed |
| Embodiment 2-2 | 2.3 | 1.55 | 0.67 | 85.5 | 8/10 passed |
| Embodiment 2-3 | 2.3 | 1.85 | 0.80 | 85.6 | 9/10 passed |
| Embodiment 2-4 | 2.3 | 2.23 | 0.97 | 86.1 | 10/10 passed |
| Embodiment 2-5 | 2.3 | 2.65 | 1.24 | 86.8 | 10/10 passed |
| Embodiment 2-6 | 2.3 | 3 | 1.30 | 85.7 | 10/10 passed |
| Embodiment 2-7 | 1 | 3 | 3 | 82.5 | 8/10 passed |
| Embodiment 2-8 | 2.5 | 1.5 | 0.6 | 85.5 | 8/10 passed |
| Embodiment 2-9 | 3 | 1.5 | 0.5 | 80.2 | 6/10 passed |
| Embodiment 2-10 | 0.5 | 1.85 | 3.7 | 79.4 | 5/10 passed |

As can be seen from Embodiment 1-16 and Embodiments 2-1 to 2-10, when the electrolyte retention coefficient a and the tortuosity d of the separator satisfy $1.5 \leq d \leq 3$ and $0.6 \leq d/a \leq 3$, the lithium-ion battery exhibits good low-temperature discharge performance and safety performance.

**Embodiments 3-1 to 3-8**

**<Preparing an electrolyte solution>**

Identical to Embodiment 1-16 except that the vinylene carbonate is added into the electrolyte solution at the mass percentage shown in Table 3 and the mass percentage of the DEC is reduced accordingly to meet the total mass percentage 100% of the electrolyte solution. The relevant preparation parameters and performance parameters are changed according to Table 3.

The steps of <Preparing a positive electrode plate>, <Preparing a negative electrode plate>, <Preparing a separator>, and <Preparing a lithium-ion battery> are the same as those described in Embodiment 1-16.

**Embodiment 3-9**

**<Preparing an electrolyte solution>**

Identical to Embodiment 1-2 except that the vinylene carbonate is added into the electrolyte solution at the mass percentage shown in Table 3 and the mass percentage of the DEC is reduced accordingly to meet the total mass percentage 100% of the electrolyte solution. The relevant preparation parameters and performance parameters are changed according to Table 3.

The steps of <Preparing a positive electrode plate>, <Preparing a negative electrode plate>, <Preparing a separator>, and <Preparing a lithium-ion battery> are the same as those described in Embodiment 1-2.

**Table 3**

|  | Electrolyte retention coefficient a (g/Ah) | Vinylene carbonate Mass percentage c (%) | c/a | Capacity recovery rate of fully charged battery after storing at 60 °C for 30 days (%) |
|---|---|---|---|---|
| Embodiment 1-2 | 1 | / | / | 77.3 |
| Embodiment 1-16 | 2.3 | / | / | 85.6 |
| Embodiment 3-1 | 2.3 | 0.0089 | 0.0039 | 85.8 |

(continued)

| | Electrolyte retention coefficient a (g/Ah) | Vinylene carbonate | c/a | Capacity recovery rate of fully charged battery after storing at 60 °C for 30 days (%) |
|---|---|---|---|---|
| | | Mass percentage c (%) | | |
| Embodiment 3-2 | 2.3 | 0.089 | 0.039 | 85.9 |
| Embodiment 3-3 | 2.3 | 0.44 | 0.19 | 86.1 |
| Embodiment 3-4 | 2.3 | 0.71 | 0.31 | 86.4 |
| Embodiment 3-5 | 2.3 | 0.88 | 0.38 | 86.6 |
| Embodiment 3-6 | 2.3 | 1.32 | 0.57 | 86.7 |
| Embodiment 3-7 | 2.3 | 1.75 | 0.76 | 86.5 |
| Embodiment 3-8 | 2.3 | 2.6 | 1.13 | 86.2 |
| Embodiment 3-9 | 1 | 2.6 | 2.6 | 80.9 |
| "/" indicates absence of this material or constituent. | | | | |

As can be seen from Embodiment 1-16 and Embodiments 3-1 to 3-9, when the electrolyte retention coefficient a and the mass percentage c of the vinylene carbonate satisfy $0.005 \leq c \leq 3$ and $0.003 \leq c/a \leq 3$, the lithium-ion battery exhibits good high-temperature storage performance.

**Embodiments 4-1 to 4-30**

**<Preparing an electrolyte solution>**

Identical to Embodiment 1-16 except that a sulfonate ester compound, a first fluorine-containing lithium salt additive, a second fluorine-containing lithium salt additive, and a polynitrile compound or aromatic compound are added into the electrolyte solution at the mass percentage shown in Table 4 and the mass percentage of the DEC is reduced accordingly to meet the total mass percentage 100% of the electrolyte solution. The relevant preparation parameters and performance parameters are changed according to Table 4.

The steps of <Preparing a positive electrode plate>, <Preparing a negative electrode plate>, <Preparing a separator>, and <Preparing a lithium-ion battery> are the same as those described in Embodiment 1-16.

**Table 4**

| | Sulfonate eater compound | Fluorine-containing lithium salt additive | | Polynitrile compound | Aromatic compound | Capacity retention rate of battery discharged at -20 °C low temperature (%) | 140 °C hot oven (30 min) |
| | | First fluorine-containing lithium salt additive | Second fluorine-containing lithium salt additive | | | | |
| | Mass percentage e (%) | Mass percentage f1 (%) | Mass percentage f2 (%) | Mass percentage g (%) | Mass percentage h (%) | | |
| | 1,3-propane sultone | Lithium bis(fluorosulfonyl)imide | Lithium difluoro(oxalato)phosphate | Adiponitrile | Cyclohexylbenzene | | |
| Embodiment 1-16 | / | / | / | / | / | 85.8 | 4/10 passed |
| Embodiment 4-1 | 0.01 | / | / | / | / | 85.9 | 4/10 passed |
| Embodiment 4-2 | 0.27 | / | / | / | / | 86.1 | 5/10 passed |
| Embodiment 4-3 | 1.75 | / | / | / | / | 86.3 | 5/10 passed |
| Embodiment 4-4 | 2.6 | / | / | / | / | 86.3 | 5/10 passed |
| Embodiment 4-5 | 5 | / | / | / | / | 86.3 | 5/10 passed |
| Embodiment 4-6 | / | 0.087 | / | / | / | 86.2 | 5/10 passed |
| Embodiment 4-7 | / | 3.7 | / | / | / | 87.8 | 6/10 passed |
| Embodiment 4-8 | / | 6 | / | / | / | 87.9 | 6/10 passed |
| Embodiment 4-9 | / | / | 0.01 | / | / | 86 | 5/10 passed |
| Embodiment 4-10 | / | / | 1.72 | / | / | 86.3 | 5/10 passed |
| Embodiment 4-11 | / | / | 3 | / | / | 86.1 | 5/10 passed |
| Embodiment 4-12 | / | 0.087 | 1.72 | / | / | 86.4 | 5/10 passed |
| Embodiment 4-13 | / | 6 | 1.72 | / | / | 88.2 | 6/10 passed |
| Embodiment 4-14 | / | 3.7 | 0.087 | / | / | 87.9 | 6/10 passed |
| Embodiment 4-15 | / | 3.7 | 3 | / | / | 87.6 | 6/10 passed |
| Embodiment 4-16 | 1.74 | / | 0.01 | / | / | 86.4 | 6/10 passed |
| Embodiment 4-17 | 1.73 | / | 0.26 | / | / | 86.6 | 6/10 passed |
| Embodiment 4-18 | 1.72 | / | 1.72 | / | / | 86.7 | 6/10 passed |
| Embodiment 4-19 | 1.69 | / | 3 | / | / | 86.8 | 7/10 passed |

(continued)

| Embodiment | Sulfonate eater compound Mass percentage e (%) | Fluorine-containing lithium salt additive | | Polynitrile compound Mass percentage g (%) | Aromatic compound Mass percentage h (%) | Capacity retention rate of battery discharged at -20 °C low temperature (%) | 140 °C hot oven (30 min) |
| | | First fluorine-containing lithium salt additive Mass percentage f1 (%) | Second fluorine-containing lithium salt additive Mass percentage f2 (%) | | | | |
| | 1,3-propane sultone | Lithium bis(fluorosulfonyl)imide | Lithium difluoro(oxalato) phosphate | Adiponitrile | Cyclohexylbenzene | | |
| Embodiment 4-20 | 1.74 | / | 0.26 | 0.087 | / | 86.6 | 6/10 passed |
| Embodiment 4-21 | 1.74 | / | 0.26 | 0.26 | / | 86.7 | 6/10 passed |
| Embodiment 4-22 | 1.73 | / | 0.26 | 0.86 | / | 86.4 | 7/10 passed |
| Embodiment 4-23 | 1.73 | / | 0.26 | 1.71 | / | 86.3 | 7/10 passed |
| Embodiment 4-24 | 1.71 | / | 0.26 | 3 | / | 85.9 | 7/10 passed |
| Embodiment 4-25 | 1.74 | 3.7 | 0.26 | 0.26 | 0.0086 | 88.6 | 7/10 passed |
| Embodiment 4-26 | 1.73 | 3.7 | 0.26 | 0.26 | 0.43 | 88.6 | 7/10 passed |
| Embodiment 4-27 | 1.72 | 3.7 | 0.26 | 0.26 | 0.86 | 88.7 | 8/10 passed |
| Embodiment 4-28 | 1.69 | 3.6 | 0.25 | 0.25 | 2.54 | 88.7 | 9/10 passed |
| Embodiment 4-29 | 1.67 | 3.6 | 0.25 | 0.25 | 4.16 | 88.8 | 10/10 passed |
| Embodiment 4-30 | 1.67 | 3.6 | 0.25 | 0.25 | 7 | 88.4 | 10/10 passed |

"/" indicates absence of this material or constituent.

15

As can be seen from Embodiment 1-16 and Embodiments 4-1 to 4-5, the sulfonate ester compound added in the electrolyte solution can improve the low-temperature discharge performance of the lithium-ion battery. The improvement effect intensifies with the increase of the content of the sulfonate ester compound. However, when the content of the sulfonate ester compound is higher than 5%, the low-temperature discharge performance stops improving. When the mass percentage e of the sulfonate ester compound satisfies $0.01 \leq e \leq 5$, the lithium-ion battery exhibits good low-temperature discharge performance and safety performance.

As can be seen from Embodiment 1-16 and Embodiments 4-6 to 4-15, when the first fluorine-containing lithium salt additive and/or second fluorine-containing lithium salt additive are added into the electrolyte solution, the low-temperature discharge performance and hot-oven safety performance of the lithium-ion battery can be improved. As can be seen from Embodiment 1-16 and Embodiments 4-1 to 4-30, when at least one of the sulfonate ester compound, the first fluorine-containing lithium salt additive, the second fluorine-containing lithium salt additive, the polynitrile compound, or the aromatic compound is added into the electrolyte solution of this application, the low-temperature discharge performance and hot-oven safety performance of the lithium-ion battery can be further improved.

**Embodiments 5-1 to 5-14**

Identical to Embodiment 1-16 except that the relevant preparation parameters and performance parameters are changed according to Table 5.

**Table 5**

| | Thickness i of separator ($\mu$m) | Compaction density j of positive active material layer | $D_{v50}$ k of positive active material ($\mu$m) | i+k | Capacity retention rate of battery discharged at -20 °C low temperature (%) |
|---|---|---|---|---|---|
| Embodiment 1-16 | 7 | 2.5 | 10 | 17 | 85.8 |
| Embodiment 5-1 | 3 | 2.5 | 10 | 13 | 86.2 |
| Embodiment 5-2 | 8 | 2.5 | 10 | 18 | 86.3 |
| Embodiment 5-3 | 12 | 2.5 | 10 | 22 | 86 |
| Embodiment 5-4 | 16 | 2.5 | 10 | 26 | 85.8 |
| Embodiment 5-5 | 20 | 2.5 | 10 | 30 | 85.5 |
| Embodiment 5-6 | 8 | 1.5 | 10 | 18 | 85.6 |
| Embodiment 5-7 | 8 | 2.7 | 10 | 18 | 86.9 |
| Embodiment 5-8 | 8 | 3 | 10 | 18 | 87 |
| Embodiment 5-9 | 8 | 4 | 10 | 18 | 84.8 |
| Embodiment 5-10 | 8 | 2.7 | 2 | 10 | 87.5 |
| Embodiment 5-11 | 8 | 2.7 | 8 | 16 | 87.6 |
| Embodiment 5-12 | 8 | 2.7 | 13 | 21 | 87.9 |
| Embodiment 5-13 | 8 | 2.7 | 20 | 28 | 87 |
| Embodiment 5-14 | 8 | 2.7 | 37 | 45 | 85.5 |

As can be seen from Embodiment 1-16 and Embodiments 5-1 to 5-14, when the compaction density j of the positive active material layer is 1 g/cm³ to 4 g/cm³, the lithium-ion battery exhibits good low-temperature discharge performance. When the thickness i of the separator is 3 $\mu$m to 20 $\mu$m and the $D_{v50}$ k of the positive active material is 2 $\mu$m to 40 $\mu$m and satisfies 5 $\mu$m $\leq$ i + k $\leq$ 60 $\mu$m, the lithium-ion battery exhibits good low-temperature discharge performance.

What is described above is merely exemplary embodiments of this application, but is not intended to limit this application. Any modifications, equivalent replacements, improvements, and the like made without departing from the spirit and principles of this application still fall within the protection scope of this application.

**Claims**

1. An electrochemical device, comprising a positive electrode, a negative electrode, a separator, and an electrolyte solution, wherein the electrolyte solution comprises an additive; an electrolyte retention coefficient of the electrochemical device is a g/Ah, satisfying: $0.5 \leq a \leq 3.5$; based on a total mass of the electrolyte solution, a mass percentage of the additive is b%, satisfying: $0.005 \leq b \leq 3$; and the additive comprises at least one of lithium bis(oxalato)borate, vinyl ethylene carbonate, methylene methane disulfonate, triallyl phosphate, trifluoromethyl ethylene carbonate, or prop-1-ene-1,3-sultone.

2. The electrochemical device according to claim 1, wherein the electrolyte retention coefficient of the electrochemical device, denoted as a g/Ah, is 1 g/Ah to 2.5 g/Ah and satisfies: $-1.6 \leq \ln(a \times b) \leq 1.8$.

3. The electrochemical device according to claim 1, wherein a tortuosity d of the separator is 1.5 to 3, satisfying: $0.6 \leq d/a \leq 3$.

4. The electrochemical device according to claim 1, wherein, the electrolyte solution further comprises vinylene carbonate, and, based on the total mass of the electrolyte solution, a mass percentage of the vinylene carbonate is c%, satisfying: $0.005 \leq c \leq 3$, and $0.003 \leq c/a \leq 3$.

5. The electrochemical device according to claim 1, wherein the electrolyte solution further comprises a sulfonate ester compound, the sulfonate ester compound comprises at least one of 1,3-propane sultone, 1,4-butane sultone, 1,3-propane disulfonic anhydride, or 2,4-butane sultone, and, based on the total mass of the electrolyte solution, a mass percentage of the sulfonate ester compound is e%, satisfying: $0.01 \leq e \leq 5$.

6. The electrochemical device according to claim 1, wherein the electrolyte solution comprises a first fluorine-containing lithium salt additive; the first fluorine-containing lithium salt additive comprises at least one of lithium bis(trifluoromethanesulfonyl)imide or lithium bis(fluorosulfonyl)imide, and, based on the total mass of the electrolyte solution, a mass percentage of the first fluorine-containing lithium salt additive is f1%, satisfying: $0.08 \leq f1 \leq 6$; and/or
the electrolyte solution comprises a second fluorine-containing lithium salt additive; the second fluorine-containing lithium salt additive comprises at least one of lithium difluoro(oxalato)borate, lithium difluoro(oxalato)phosphate, or lithium tetrafluoroborate, and, based on the total mass of the electrolyte solution, a mass percentage of the second fluorine-containing lithium salt additive is f2%, satisfying: $0.01 \leq f2 \leq 3$.

7. The electrochemical device according to claim 1, wherein the electrolyte solution further comprises a polynitrile compound; the polynitrile compound comprises at least one of succinonitrile, glutaronitrile, adiponitrile, 1,4-dicyano-2-butene, 1,2-bis(2-cyanoethoxy)ethane, 1,3,6-hexanetricarbonitrile, or 1,2,3-tris(2-cyanoethoxy)propane; and, based on the total mass of the electrolyte solution, a mass percentage of the polynitrile compound is g%, satisfying: $0.08 \leq g \leq 3$.

8. The electrochemical device according to claim 1, wherein the electrolyte solution further comprises an aromatic compound; the aromatic compound comprises at least one of biphenyl, cyclohexylbenzene, fluorobenzene, or difluorobiphenyl; and, based on the total mass of the electrolyte solution, a mass percentage of the aromatic compound is h%, satisfying: $0.008 \leq h \leq 7$.

9. The electrochemical device according to claim 1, wherein the positive electrode comprises a positive active material layer, and a compaction density j of the positive active material layer is 1 g/cm$^3$ to 4 g/cm$^3$.

10. The electrochemical device according to claim 9, wherein the positive active material layer comprises a positive active material, $D_{v50}$ of the positive active material is k, k is 2 $\mu$m to 40 $\mu$m, and a thickness of the separator is i, satisfying: i is 3 $\mu$m to 20 $\mu$m, and 5 $\mu$m $\leq i + k \leq$ 60 $\mu$m.

11. An electronic device, wherein the electronic device comprises the electrochemical device according to any one of claims 1 to 10.

## INTERNATIONAL SEARCH REPORT

International application No.

**PCT/CN2021/142110**

| A. | CLASSIFICATION OF SUBJECT MATTER |
|---|---|

H01M 10/0525(2010.01)i; H01M 10/0567(2010.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电解液, 添加剂, 保液, g/Ah, 双草酸硼酸锂, 碳酸乙烯亚酯, 甲烷二磺酸亚甲酯, 三烯丙基磷酸酯, 三氟甲基碳酸乙烯酯, 丙烯基-1, 3-磺酸内酯, electrolyte, additive, electrolyte retention, lithium bis(oxalato)borate, vinyl ethylenecarbonate, methylene methanedisulfonate, triallyl phosphate, trifluoromethyl ethylene carbonate, prop-1-ene-1, 3-sultone

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111628219 A (NINGDE AMPEREX TECHNOLOGY LTD.) 04 September 2020 (2020-09-04) description, paragraphs 37-117 | 1-2, 4-11 |
| Y | CN 111628219 A (NINGDE AMPEREX TECHNOLOGY LTD.) 04 September 2020 (2020-09-04) description, paragraphs 37-117 | 3 |
| Y | CN 110600658 A (TEIJIN LTD.) 20 December 2019 (2019-12-20) description, paragraphs 116-123 | 3 |
| X | WO 2015079893 A1 (HITACHI MAXELL, LTD.) 04 June 2015 (2015-06-04) description, paragraphs 2 and 11-60 | 1-2, 4-11 |
| Y | WO 2015079893 A1 (HITACHI MAXELL, LTD.) 04 June 2015 (2015-06-04) description, paragraphs 2 and 11-60 | 3 |
| X | CN 109667028 A (SOUNDON NEW ENERGY TECHNOLOGY CO., LTD.) 26 April 2019 (2019-04-26) description, paragraphs 2-38 | 1-2, 4-11 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **26 August 2022** | **07 September 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2021/142110** |

### C.    DOCUMENTS CONSIDERED TO BE RELEVANT

| Category* | Citation of document, with indication, where appropriate, of the relevant passages | Relevant to claim No. |
|---|---|---|
| Y | CN 109687028 A (SOUNDON NEW ENERGY TECHNOLOGY CO., LTD.) 26 April 2019 (2019-04-26) <br> description, paragraphs 2-38 | 3 |
| X | CN 111540945 A (NINGDE AMPEREX TECHNOLOGY LTD.) 14 August 2020 (2020-08-14) <br> description, paragraphs 40-195 | 1-2, 4-11 |
| Y | CN 111540945 A (NINGDE AMPEREX TECHNOLOGY LTD.) 14 August 2020 (2020-08-14) <br> description, paragraphs 40-195 | 3 |
| A | CN 110148784 A (ZHUHAI GUANYU BATTERY CO., LTD.) 20 August 2019 (2019-08-20) <br> entire document | 1-11 |

Form PCT/ISA/210 (second sheet) (January 2015)

**INTERNATIONAL SEARCH REPORT**
Information on patent family members

International application No.

**PCT/CN2021/142110**

| Patent document cited in search report | | | Publication date (day/month/year) | Patent family member(s) | | | Publication date (day/month/year) |
|---|---|---|---|---|---|---|---|
| CN | 111628219 | A | 04 September 2020 | None | | | |
| CN | 110600658 | A | 20 December 2019 | JP | 2019216033 | A | 19 December 2019 |
| | | | | KR | 20190141082 | A | 23 December 2019 |
| WO | 2015079893 | A1 | 04 June 2015 | JP | 2015103408 | A | 04 June 2015 |
| | | | | JP | 6208560 | B2 | 04 October 2017 |
| CN | 109687028 | A | 26 April 2019 | None | | | |
| CN | 111540945 | A | 14 August 2020 | CN | 111540945 | B | 21 September 2021 |
| CN | 110148784 | A | 20 August 2019 | None | | | |

Form PCT/ISA/210 (patent family annex) (January 2015)